# EUROPEAN PATENT SPECIFICATION

(11) **EP 0 988 560 B1**
(45) Date of publication and mention of the grant of the patent: **14.11.2001**
(21) Application number: 97945169.7
(22) Date of filing: 10.06.1997
(51) Int. Cl.: G01S 13/60, G01S 13/18, G01S 13/64

(54) **ALTITUDE AND VELOCITY SENSING SYSTEM**
SYSTEM FÜR HÖHEN- UND GESCHWINDIGKEITSMESSUNG
SYSTEME DE MESURE DE VITESSE ET D'ALTITUDE

(43) Date of publication of application: 29.03.2000
(73) Proprietor: HONEYWELL INC., Minneapolis Minnesota 55408 (US)
(72) Inventor: HAGER, James, R., Garden Valley, MN 55427 (US)
(74) Representative: Sturm, Christoph, Dipl.-Ing.
(86) International application number: US9709747
(87) International publication number: WO9857192

(56) References cited:
- US-A- 4 069 468
- HEIDE P ET AL: "CODED 24 GHZ DOPPLER RADAR SENSORS: A NEW APPROACH TO HIGH-PRECISION VEHICLE POSITION AND GROUND-SPEED SENSING IN RAILWAY AND AUTOMOBILE APPLICATIONS" IEEE MTT-S INTERNATIONAL MICROWAVE SYMPOSIUM DIGEST, ORLANDO, MAY 16 - 20, 1995, vol. 2, 16 May 1995, KIRBY L (ED ), pages 965-968, XP000537007

## Description

In the landing of aircraft especially unmanned aircraft, it is important to know the altitude of the aircraft as well as the velocity the aircraft is traveling. Altimeters have been used to determine the altitude and velocimeters are well known to measure the velocity.
Altimeters and velocimeters are connected to antennas which transmit and receive information that is used to determine altitude and velocity.

With altimeters, the antenna sends a radio frequency (RF) signal to the ground. The antenna pattern creates a radar illumination spot on the ground. When the signal returns after reflecting from the ground, the altitude (H) can be determined with some calculation.

Altitude antennas are generally wide beam to allow tracking of the altitude vector (which is perpendicular to the ground), during aircraft roll maneuvers. Velocimeters, on the other hand, use multiple antennas to determine XYZ velocity. Like altimeters, each antenna transmits an RF signal down at an angle and the return signal frequency differs by the Doppler frequency shift which is proportional to the velocity. Calculations are performed to determine the velocity from this frequency difference. It is desirable to have a narrow beam so that the information is gathered from a smaller radar illumination spot on the ground to provide more accuracy.

Small antennas have a large beam and the only possible way to get a smaller beam for the velocimeters operating at a reasonably low frequency would be to use larger antennas. This creates a problem because of increased cost, space and weight. The weight would be a grave problem as it would unduly burden the vehicle. It would be beneficial to have a system which uses small antennas that obtain accurate information for calculation of altitude and velocity of the aircraft. Further, it would also be beneficial to combine the velocimeter and the altimeter to further reduce costs, space and weight.

Reference is made to US-A-4,069,468 showing the features according to the preamble of claim 1.

A system is disclosed which determines the altitude and velocity of an aircraft when it is preparing for landing. The system includes small antennas which send out beams to the ground in which information received upon the reflection of the beam impacting the ground surface determines the altitude. Based on the altitude information and a sampling arrangement, velocity can also be determined without resorting to larger antennas or higher operating frequency.

Fig. 1 shows a block diagram of the altitude/velocity sensing system.

Fig. 2 shows a vehicle transmitting four beams to a ground surface to gather information in determining the altitude and velocity of the vehicle.

Fig. 3 shows the timing sequence for when information is gathered from the beams transmitted to the ground surface.

Fig. 4 shows a radar ground illumination at level flight.

Fig. 5 shows a radar ground illumination at extreme roll or pitch.

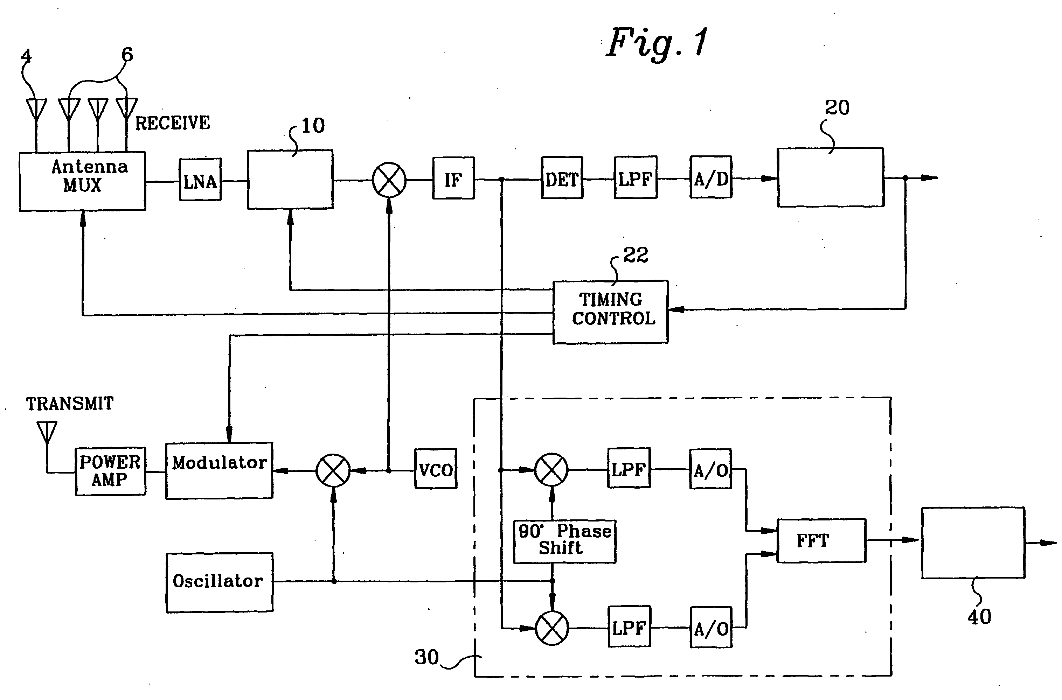

The present invention is an altitude/velocity sensing system to assist an aircraft in landing. The apparatus includes a radar altimeter with a Doppler processor connected to the altimeter so that both altitude and velocity of an aircraft can be determined. Figure 1 shows a block diagram of the system. The elements will be described below by their relevance to the essential operations of the system. Basic elements such as amplifiers and filters will not be discussed in any detail, but it will be understood that filters and amplifiers are required to acquire a clear signal for processing.
A single vertical wide beam antenna, hereafter referred to as the vertical antenna 4, directs a beam directly below the aircraft. Once a signal is received after reflecting from the ground, the altitude of the aircraft can be determined from calculations based on the time the signal was transmitted to the time the signal was received.
Three antennas 6, hereafter referred to as first slant antenna, second slant antenna, and third slant antenna are spaced equidistant from one another.
The reason a total of four antennas are used is that XYZ velocity requires a minimum of three antennas and one more antenna is used for redundancy. Each slant antenna 6 directs a beam at a desired angle. In the case of the present embodiment, the angle is 40 degrees from the vertical or altitude vector established by antenna 4. All the antennas 6 are set at the same angle. 40 degrees is chosen to allow a reasonable level of roll or pitch as will be illustrated later. However, other angles, for example angles varying plus or minus ten degrees from 40 degrees are also acceptable. Beyond this range, the information that is received by the antennas 6 may be inaccurate due to swaying of an aircraft as it lands.

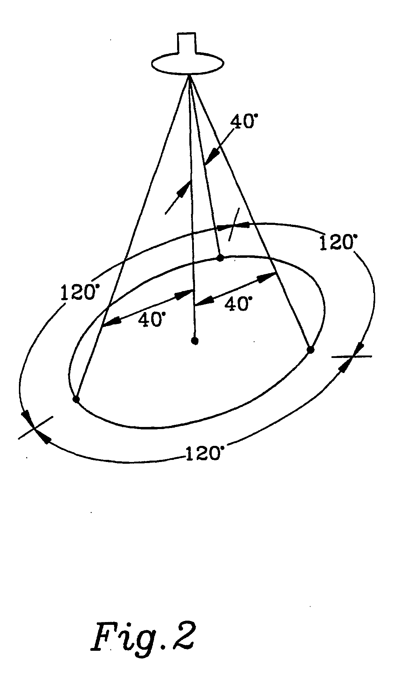

Figure 2 shows the aircraft with the four beams directed onto the surface.
As can be seen from the figure, there is one vertical beam and three slant beams at an angle of 40 degrees from the vertical central beam.
As stated in the background of the invention, it is advantageous to have a smaller beam to obtain more accurate measurements. Once the vertical antenna 4 receives the signal upon reflection from the ground surface, it is sent through multiple elements until it reaches an altitude processor 20.
With the exception of the gate 10, which will be discussed in detail later, most of the other elements, such as filters and amplifiers, are used to produce a clear signal for the altitude processor 20 and velocity processor 30 to process information from the beam and will not be discussed in any great detail.
The altitude processor 20 samples and processes the altitude return signal and determines that the altitude is H. Concerning determining the velocity, the altitude processor 20 determines that velocity "samples" should occur at a slant range of (H/cosθ) after the transmission of the signal where θ is the angle from the vertical to a slant beam. As stated above, 40 degrees is used for the present embodiment as an example, but any angle within the range described above can be used.
The gate 10 controls the passing of radar ground return signal from the antennas 4 and 6 to processors 20 and 30. The timing control 22 controls the gate 10 as to when information is to be passed to processors 20 and 30. Therefore, after it is determined by the processor 20 that H/cos40 is the appropriate slant range to set the gate 10, the timing control 22 sends this value to the gate 10 which then gates ground return signal from the antennas 6 to the processor 30 so that velocity is determined. Velocity samples are taken after the altitude is sampled and processed.

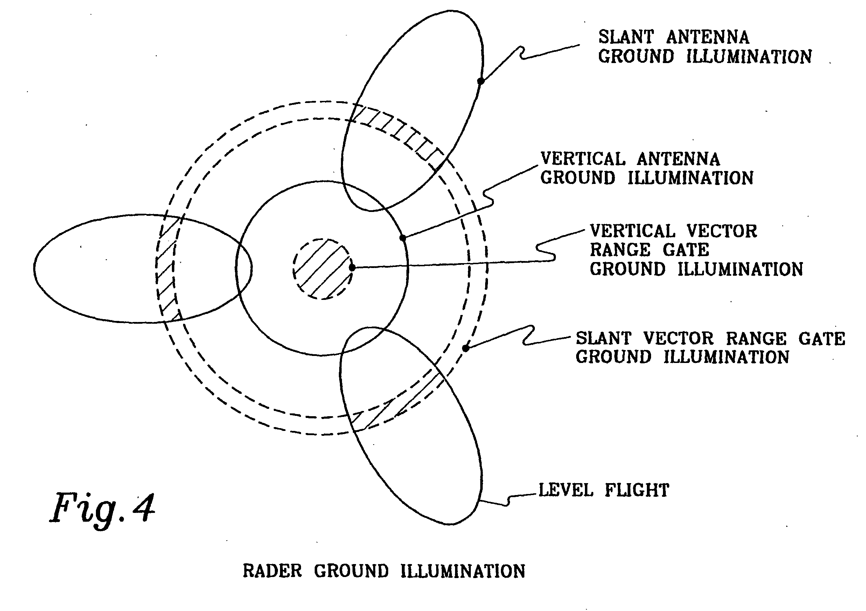

Fig. 4 shows ground illumination spots created by the beams of the four antennas 4 and 6. This figure is representative of a level flight. The circular shaped spot in the center is created by the beam from the vertical antenna 4. The three ellipse shaped spots are created by the beam from the slant antennas 6. As mentioned previously, it is important in gating the return signal so that only a narrow portion of the return signal is processed for accuracy. The gating technique is shown by the shaded area between the crossed lines. For the vertical antenna 4, the gate area is in the center of the spot whereas for the slant antennas 6, the gate area is a cross-section of the ellipse shaped spot.

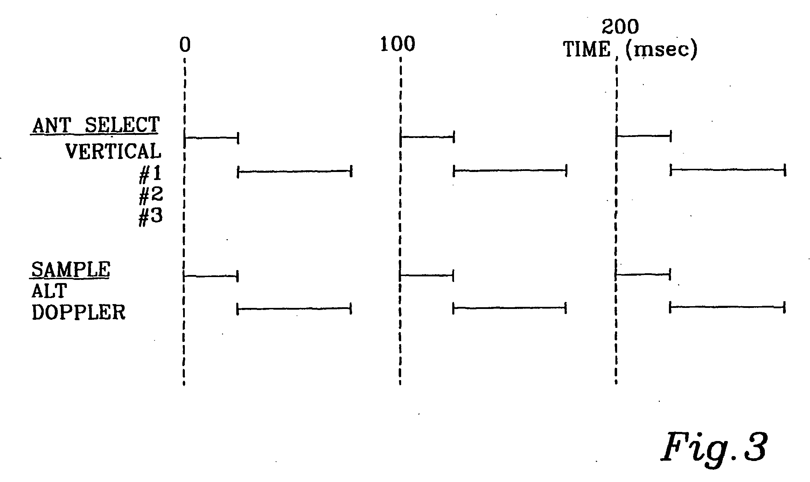

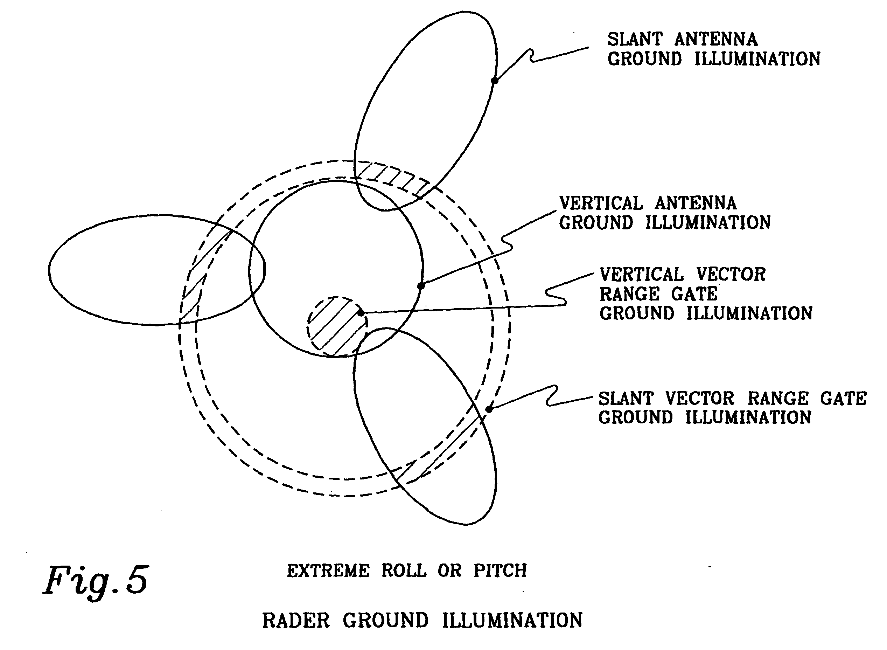

Also as is previously mentioned, many times extreme pitch and roll of the aircraft exists. This system provides exceptional accuracy in these circumstances as well. Fig. 5 shows the ground illumination spots again of the four beams created by the four antennas 4 and 6. Fig. 5 shows the extreme pitch and roll effect on the spots. However, the system disclosed provides a gating technique which is independent of the pitch and roll effects. As can be seen in Fig. 5, the gating technique still adequately positions the spots at vertical within the center antenna beam, and 40 degrees out from the vertical in the beam of the slant antennas resulting in proper information still obtained to process and determine the altitude and velocity.
After the first altitude sampling and processing interval and a first slant range interval occurs, the system returns to obtain a second altitude measurement before going to the second slant antenna. As stated before, after each velocity interval, the system always returns to another altitude measurement as a reference before going to sample the next velocity beam.
This is shown in Figure 3.
Looking at Figure 3, a sequence can be seen of gating and sampling the altitude return from the vertical antenna 4, velocity from the first slant antenna 6, altitude from the vertical antenna 4, velocity from the second slant antenna 6, altitude from the vertical antenna 4, velocity from the third slant antenna 6, altitude from the vertical antenna 4, velocity from the vertical antenna 4, and then the sequence repeats itself from beginning of gating and sampling the altitude from the vertical antenna 4. An example of how this gating affects the beam is imagining that the slant antenna ground illumination spot is an ellipse and the gate 10 takes a small and controlled section of that return to process. See Figs. 4 and 5 for examples.
Fig. 3 shows that the altitude sampling and processing time is 25 msec and 50 msec for each of the four velocity vectors. 25 msec is chosen for the sample time of altitude since it provides sufficient settling time for the altitude processor 20. 50 msec is chosen for the velocity sampling because
it is the amount of time required to take the number of samples sufficient to provide reasonable velocity resolution at maximum landing velocities.
These time values are roughly the amount of time required for sampling, but are not confined to these times. More or less times can be used for more resolution or increased landing velocities.
Once all the velocity returns have been sampled and processed by the Fast Fourier Transform 35 in the Doppler processor 30, the information is sent to a velocity processor 40 to determine the XYZ velocity from the individual beam frequency spectrums produced by the Fast Fourier Transform 35.
Spectral analysis algorithms are well known in this area of technology and will not be discussed in any further detail. With this gating technique, a
system has been devised to more accurately bound the antenna beam ground illumination spot required to accurately determine velocity of an aircraft.
Using small antennas and relatively low frequency, this technique saves, cost, space and weight.

The present invention has been described in terms of schematic block diagrams employing an altimeter and Doppler processor.

## Claims

1. Altitude and velocity sensing system for a vehicle, comprising:
a plurality of slant antennas (6);
a processor (20, 30) to determine the velocity and altitude of said vehicle; and
a gate apparatus (10) for controlling information to be passed from said slant antennas;
**characterized by**:
a vertical antenna (4);
whereby said gate apparatus (10) controls information to be passed to the processor from the vertical and slant antennas so that the altitude and velocity determination is more accurate and efficient.

2. The system of claim 2, wherein the information used to determine the altitude is used to determine the time the gate apparatus (10) allows passing of information necessary in calculating the velocity of the vehicle.

3. The system of claim 1, wherein one of the plurality of antennas is used to transmit and receive information in determining altitude of the vehicle.

4. The system of claim 1, wherein at least three of the plurality of antennas are used to transmit and receive information in determining velocity of the vehicle.

5. The system according to claim 1, comprising:
a plurality of antennas transmitting a signal to a ground surface and receiving a return signal, with said plurality of antennas including said vertical antenna (4) and said plurality of slant antennas (6);
a switch connected to the antennas to direct when the antennas transmit a signal and
when the antennas receive a signal;
means (MUX) for activating only one antenna at a time;
timing control means (22) connected to the activating means for selecting the one antenna to operate at a time;
said processor (20, 30) to determine the altitude and velocity based on information from the antennas; and
said gate means (10) connected to the timing control means (22) to control information transmitted to the processor so that the transmitted information is accurate and
efficient.

6. The system of claim 6, wherein the gate allows information regarding the altitude to move to the processor for 25 milliseconds.

7. The system of claim 6, wherein the gate allows information regarding the velocity to move to the processor for 50 milliseconds.

8. The system of claim 6, wherein said vertical antenna (4) is used to transmit and receive information in determining altitude of the vehicle.

9. The system of claim 6, wherein at least three slant antennas (6) are used to transmit and receive information in determining the velocity of the vehicle.

## Patentansprüche

1. Höhen- und Geschwindigkeitsmeßsystem für ein Fahrzeug, das folgendes umfaßt:
mehrere Schrägantennen (6);
einen Prozessor (20, 30) zum Bestimmen der Geschwindigkeit und Höhe des Fahrzeugs; und
eine Gattervorrichtung (10) zum Steuern von von den Schrägantennen weiterzuleitenden Informationen;
**gekennzeichnet durch**:
eine vertikale Antenne (4);
wobei die Gattervorrichtung (10) von den vertikalen und Schrägantennen zu dem Prozessor weiterzuleitende Informationen derart steuert, daß die Höhe und die Geschwindigkeit präziser und effizienter bestimmt werden.

2. System nach Anspruch 2, bei dem mit den zur Bestimmung der Höhe verwendeten Informationen die Zeit bestimmt wird, während der die Gattervorrichtung (10) das Weiterleiten von Informationen gestattet, die zur Berechnung der Geschwindigkeit des Fahrzeugs notwendig sind.

3. System nach Anspruch 1, bei dem mit einer der mehreren Antennen beim Bestimmen der Höhe des Fahrzeugs Informationen gesendet und empfangen werden.

4. System nach Anspruch 1, bei dem mit mindestens drei der mehreren Antennen beim Bestimmen der geschwindigkeit des Fahrzeugs Informationen gesendet und empfangen werden.

5. System nach Anspruch 1, das folgendes umfaßt:
mehrere Antennen, die ein Signal zu einer Bodenoberfläche senden und ein Rücksignal empfangen, wobei die mehreren Antennen die vertikale Antenne (4) und die mehreren Schrägantennen (6) enthalten;
einen an die Antennen angeschlossenen Schalter zum Anweisen, wann die Antennen ein Signal senden und wann die Antennen ein Signal empfangen;
ein Mittel (MUX) zum Aktivieren jeweils nur einer Antenne;
ein an das aktivierende Mittel angeschlossene Taktsteuermittel (22) zum Wählen der einen Antenne, die jeweils arbeitet;
den Prozessor (20, 30) zum Bestimmen der Höhe und Geschwindigkeit auf der Grundlage von Informationen von den Antennen; und
das an das Taktsteuermittel (22) angeschlossene Gattermittel (10) zum Steuern von zu dem Prozessor gesendeten Informationen, so daß die gesendeten Informationen präzise und effizient sind.

6. System nach Anspruch 5, bei dem das Gatter gestattet, daß sich Informationen hinsichtlich der Höhe 25 ms lang zu dem Prozessor bewegen.

7. System nach Anspruch 5, bei dem das Gatter gestattet, daß sich Informationen hinsichtlich der Geschwindigkeit 50 ms lang zu dem Prozessor bewegen.

8. System nach Anspruch 5, bei dem mit der vertikalen Antenne (4) beim Bestimmen der Höhe des Fahrzeugs Informationen gesendet und empfangen werden.

9. System nach Anspruch 5, bei dem mit den mindestens drei Schrägantennen (6) beim Bestimmen der Geschwindigkeit des Fahrzeugs Informationen gesendet und empfangen werden.

## Revendications

1. Système de détection d'altitude et de vitesse pour véhicule, comprenant :
une pluralité d'antennes obliques (6) ;
un processeur (20, 30) pour déterminer la vitesse et l'altitude dudit véhicule ; et
un dispositif de porte (10) pour régir les informations devant être passées depuis lesdites antennes obliques ;
**caractérisé par** :
une antenne verticale (4) ;
par lequel ledit dispositif de porte (10) régit les informations devant être passées au processeur depuis les antennes verticale et obliques de telle sorte que la détermination d'altitude et de vitesse soit plus précise et plus efficace.

2. Système selon la revendication 2, dans lequel les informations utilisées pour déterminer l'altitude sont utilisées pour déterminer la durée pendant laquelle le dispositif de porte (10) autorise le passage d'informations nécessaires pour calculer la vitesse du véhicule.

3. Système selon la revendication 1, dans lequel une de la pluralité d'antennes est utilisée pour transmettre et recevoir des informations dans la détermination d'altitude du véhicule.

4. Système selon la revendication 1, dans lequel au moins trois de la pluralité d'antennes sont utilisées pour transmettre et recevoir des informations dans la détermination de vitesse du véhicule.

5. Système selon la revendication 1, comprenant :
une pluralité d'antennes transmettant un signal à une surface de terre et recevant un signal de retour, ladite pluralité d'antennes comportant ladite antenne verticale (4) et ladite pluralité d'antennes obliques (6) ;
un commutateur connecté aux antennes pour instruire quand les antennes transmettent un signal et quand les antennes reçoivent un signal ;
un moyen (MUX) pour activer une seule antenne à la fois ;
un moyen de commande de temporisation (22) connecté au moyen d'activation pour sélectionner la seule antenne à activer à la fois ;
ledit processeur (20, 30) pour déterminer l'altitude et la vitesse sur la base d'informations provenant des antennes ; et
ledit moyen de porte (10) connecté au moyen de commande de temporisation (22) pour régir les informations transmises au processeur de telle sorte que les informations transmises soient précises et efficaces.

6. Système selon la revendication 6, dans lequel la porte permet de passer au processeur des informations concernant l'altitude pendant 25 millisecondes.

7. Système selon la revendication 6, dans lequel la porte permet de passer au processeur des informations concernant la vitesse pendant 50 millisecondes.

8. Système selon la revendication 6, dans lequel ladite antenne verticale (4) est utilisée pour transmettre et recevoir des informations dans la détermination de l'altitude du véhicule.

9. Système selon la revendication 6, dans lequel au moins trois antennes obliques (6) sont utilisées pour transmettre et recevoir des informations dans la détermination de la vitesse du véhicule.
